**Europäisches Patentamt**

**European Patent Office**

**Office européen des brevets**

(19)

(11) Veröffentlichungsnummer : **0 228 626 B2**

(12) ## NEUE EUROPÄISCHE PATENTSCHRIFT

(45) Veröffentlichungstag der neuen Patentschrift :
**16.06.93 Patentblatt 93/24**

(51) Int. Cl.$^5$ : **A62D 3/00**, B09B 5/00

(21) Anmeldenummer : **86117170.0**

(22) Anmeldetag : **09.12.86**

(54) **Verfahren zur Bodendekontaminierung mittels Mikroorganismen.**

Die Akte enthält technische Angaben, die nach dem Eingang der Anmeldung eingereicht wurden und die nicht in dieser Patentschrift enthalten sind.

(30) Priorität : **20.12.85 DE 3545325**

(43) Veröffentlichungstag der Anmeldung :
**15.07.87 Patentblatt 87/29**

(45) Bekanntmachung des Hinweises auf die Patenterteilung :
**13.09.89 Patentblatt 89/37**

(45) Bekanntmachung des Hinweises auf die Entscheidung über den Einspruch :
**16.06.93 Patentblatt 93/24**

(84) Benannte Vertragsstaaten :
**AT CH DE GB LI NL**

(56) Entgegenhaltungen :
**EP-A- 0 066 898
EP-A- 0 147 721
US-A- 4 535 061
US-A- 4 554 075
EXPIERENTIA, Band 39, Nr. 11, 15. November 1983, Seiten 1231-1236, Birkhäuser Verlag, Basel, CH; R.K. FINN: "Use of specialized microbial strains in the treatment of industrial waste and in soil decontamination"**

(56) Entgegenhaltungen :
**CHEMICAL ABSTRACTS, Band 105, Nr. 4, 28. Juli 1986, Seite 326, Zusammenfassung Nr. 29240a, Columbus, Ohio, US; H. BETTMANN et al.: "Degradation of phenol by immobilized microorganisms", & EUR. CONGR. BIOTECH-NOL., 3rd 1984, 3, 27-33
CHEMICAL ABSTRACTS, Band 102, Nr. 8, 25. Februar 1985, Seite 315, Zusammenfassung Nr. 67089d, Columbus, Ohio, US; G. BATTER-MANN; "Elimination of subterranean contamination by hydrocarbons by microbial degradation", & CHEM.-ING.-TECH. 1984, 56(12), 926-8
Römpps Chemie Lexikon, 8. Auflage, 1979, S. 357-360
G. Kahle-Anders, H.H. Hanert "Mikrobiologischer Abbau von Teeröl in Wasser und Boden", gwf Wasser-Abwasser 131, 1990, S. 245ff.**

(73) Patentinhaber : **DECHEMA Deutsche Gesellschaft für Chemisches Apparatewesen, Chemische Technik und Biotechnologie e.V. Theodor-Heuss-Allee 25 W-6000 Frankfurt am Main 97 (DE)**

(72) Erfinder : **Rehm, Hans Jürgen, Prof. Dr. Ludwig Wokertstrasse 17 W-4400 Münster (DE)**
Erfinder : **Kirchner, Kurt, Prof. Dr. Dipl.-Chem. Im Wingert 33 W-6236 Eschborn/Ts. (DE)**

(74) Vertreter : **Beil, Hans Chr., Dr. et al Beil, Wolff und Beil, Rechtsanwälte Adelonstrasse 58 Postfach 80 01 40 W-6230 Frankfurt am Main 80 (DE)**

**EP 0 228 626 B2**

**Beschreibung**

Die Erfindung betrifft ein Verfahren zur Bodendekontaminierung mittels Mikroorganismen, bei dem man in die mit einem oder mehreren organischen Schadstoffen kontaminierten Erdschichten schadstoffspezifische Mikroorganismen in hoher Konzentration einbringt.

Die Dekontaminierung von Böden, die mit organischen Verbindungen wie Heizöl, Chemikalien etc. verunreinigt sind, ist von großer praktischer Bedeutung.

Bodenpartien werden sowohl durch aktuelle Unglücks- und Schadensfälle mit mehr oder weniger gefährlichen Substanzen belastet, als auch durch bereits vorhandene Altlasten, die oft noch auf Kriegseinwirkungen zurückgehen, gefährdet.

Diese im Boden befindlichen Substanzen können in das Grundwasser einsickern und dieses verunreinigen. Besonders gefährdend sind derartige Verunreinigungen, wenn sie in der Nähe von Wassereinzugsgebieten liegen.

Die Eigentümer von Grundstücken können, wenn die Gefahr der Grundwasserverunreinigung besteht, aufgefordert werden, die Verunreinigungen soweit zu beseitigen, daß keine Gefahr mehr für das Wasser besteht.

Häufig handelt es sich bei den Eigentümern um kleine und mittelständische Betriebe, für die die mit der Bodendekontaminierung verbundenen Kosten eine starke finanzielle Belastung bedeuten.

Eine bekannte Möglichkeit der Dekontaminierung besteht darin, daß man den kontaminierten Boden aushebt und auf eine geeignete Deponie fährt.

Eine weitere Möglichkeit besteht darin, den kontaminierten Boden im Drehrohrofen so hoch zu erhitzen, daß die organischen Verbindungen verbrennen.

Beide Verfahren haben den Nachteil vergleichsweise teuer und aufwendig zu sein.

Es ist ferner bekannt, Verunreinigungen des Bodens durch ausgelaufenes Heizöl oder Mineralöl durch Absenken des Grundwassers und Abpumpen des Öls in Phase zum großen Teil aus dem Erdreich zu entfernen.

Der Nachteil dieser Methode besteht darin, daß ein Rest des Heizöls im Boden verbleibt. Er kann durch Regenwasser langsam ausgespült werden und dann in das Grundwasser gelangen.

Aus G. Battermann u. P. Werner, Beseitigung einer Untergrundkontamination mit Kohlenwasserstoffen durch mikrobiellen Abbau; Gas Wasserfach, Wasser Abwasser 125, Nr. 8, 366-373 (1984) und G. Battermann, Beseitigung einer Untergrundkontamination mit Kohlenwasserstoffen durch mikrobiellen Abbau; Chem. Ing. Tech. 56, Nr. 12, 926-928 (1984) ist ein biologisches Verfahren bekannt, mit Hilfe dessen die im Boden verbliebenen organischen Verbindungen, vor allem aliphatische und aromatische Kohlenwasserstoffe, so weitgehend entfernt werden können, daß keine weitere Gefahr für eine Grundwasserverunreinigung besteht. Das Verfahren nutzt nur die von Natur aus im Boden befindlichen Mikroorganismen.

Dieses Verfahren besitzt den Nachteil, sehr zeitaufwendig zu sein (ca. 80 % der vorhandenen Verunreinigungen waren erst nach 10 Monaten abgebaut). Mit den in biologisch aktiven Erdmassen vorliegenden relativ geringen Zelldichten läßt sich nur ein sehr langsamer Abbau der Schadstoffe erzielen. Darüberhinaus liegen über die im einzelnen ablaufenden Vorgänge nur geringe Kenntnisse vor, so daß ein gezielter Abbau der Schadstoffe nicht möglich und eine ausreichende Effektivität nicht gewährleistet ist.

EP-A-0 066 898 beschreibt ein Verfahren zur Bodendekontaminierung, bei dem unter dem verunreinigten Boden befindliches Grundwasser entnommen, mit Nährstoffen und Gasen angereichert und wieder in den Boden zurückgeführt wird, um das Wachstum der von Natur aus im Boden vorkommenden Mikroorganismen und ggf. zusätzlich zugesetzten Mikroorganismen zu beschleunigen. Genauere Angaben über Schadstoffspezifität und Konzentration der zugesetzten Mikroorganismen sind dieser Druckschrift nicht zu entnehmen.

Aus der US-A-4 535 061 sind schadstoffspezifische Mikroorganismen bekannt, die beim Einbringen in den Boden in hohen Konzentrationen eine gewisse Dekontaminierung des Bodens bewirken. Im Zuge des wachsenden Umweltbewußtseins ist man jedoch bestrebt, weiter verbesserte Methoden zur Bodensanierung bereitzustellen. Ausserdem handelt es sich hier um gentechnologisch modifizierte Mikroorganismen, die bezüglich Schadstoffspezifität bisher noch nicht in der für unterschiedliche Schadstoffe erforderlichen Vielfalt zur Verfügung stehen.

Der Erfindung liegt die Aufgabe zugrunde, ein Verfahren zur Bodendekontaminierung bereitzustellen, mit Hilfe dessen kostengünstige, schnelle und gründliche Bodensanierung möglich ist.

Diese Aufgabe wird erfindungsgemäss bei einem gattungsgegemäßen Verfahren dadurch gelöst, daß man die schadstoffspezifischen Mikroorganismen in an ein Trägermaterial fixierter Form in Gegenwart von Wasser, Sauerstoff und Mineralsalzen entweder dadurch dem Boden zuführt, daß man zunächst das Trägermaterial in den Boden einbringt und dann mit einer wäßrigen Suspension der schadstoffspezifischen Mikroorganismen berieselt oder dadurch, daß man das Trägermaterial vor dem Einbringen in den Boden mit einer wäßrigen Suspension der schadstoffspezifischen Mikroorganismen in Kontakt bringt und den mit den Mikroorganismen beladenen Träger bzw. Biokatalysator in den Boden einbringt.

Mit Hilfe des erfindungsgemässen Verfahrens lassen sich auf wirtschaftliche, sehr rasche und effektive Weise mit organischen Schadstoffen verunreinigte Böden dekontaminieren.

Bei vielen technischen Schadensfällen und Altlasten liegen im Gegensatz zu Deponien weitgehend bekannte Substanzen vor, so daß mit Hilfe des erfindungsgemäßen Verfahrens ein gezielter Einsatz von Mikroorganismen möglich ist.

Unter "schadstoffspezifischen Mikroorganismen" versteht man Kulturen, die den jeweiligen Schadstoff als Substrat aufnehmen und abbauen.

Der Abbau von Alkanen und Aromaten ist bekannt. Es existieren eine Reihe von Druckschriften, in denen die biologischen Abbaukinetiken von Alkanen und Aromaten beschrieben werden (vgl. H.-J. Rehm und I. Reiff, Mechanisms and occurence of microbial oxidation of longchain alkanes, Advan. Biochem. Eng. 19, 175-215 (1981); H. Bettmann und H.-J. Rehm, Degradation of phenol by polymer entrapped microorganismus Appl. Microbiol. Biotechnol. 20, 285-290 (1984) und H.M. Ehrhardt und H.-J. Rehm, Phenol degradation by microorganisms adsorbed activated carbon, Appl. Microbiol. Biotechnol. 21, 32-36 (1985). Aus der DE-OS-3 345 944 geht ferner hervor, daß sich eine Reihe von aliphatischen Verbindungen durch Pseudomonas fluorescens und Rhodococcus sp. abbauen läßt.

Mit Hilfe des erfindungsgemäßen Verfahrens lassen sich für die jeweiligen verunreinigenden Substanzen sogenannte "maßgeschneiderte" Mikroorganismenkulturen in konzentrierter Form anwenden.

Die mit Hilfe des erfindungsgemäßen Verfahrens zu erzielenden Zelldichten in den zu dekontaminierenden Erdmassen können bis zu einem Faktor $10^6$ höher liegen als diejenigen, wie sie in biologischen Erdmassen vorliegen, wie nachstehend noch genauer erläutert wird.

Die in den Boden einzubringende Menge an Mikroorganismen richtet sich nach der Menge der Verunreinigungen und Bodenart. Die im Boden zu erzielende Zelldichte sollte jedoch nicht weniger als $10^6$ pro ml betragen.

Nachdem die gewünschte Zelldichte erreicht ist, wird die Mikroorganismenzufuhr unterbrochen, jedoch erfolgt eine weitere Berieselung des Bodens mit mineralhaltigem Wasser, vorzugsweise jedoch mit eine speziellen wäßrigen Minerallösung. Geeignete Minerallösungen werden in Kirchner K., Krämer, P., Rehm, H.-J.: Biotechnol. Lett. 3 (1981). Nr. 10, S. 567-570 und Verfahrenstechnik (Mainz) 17 (1983), S. 676, beschrieben.

Das Fixieren der schadstoffspezifischen Monokulturen oder Mischkulturen an einen Träger kann dadurch geschehen, dass man ein Trägermaterial in den Boden einbringt und anschliessend wie vorstehend beschrieben mit einer wässrigen Mikroorganismensuspension und dann mit einer wässrigen Minerallösung berieselt.

Die Menge an in den Boden einzubringendem Trägermaterial hängt von verschiedenen Faktoren ab, wie Menge der zu entfernenden Verunreinigung, Art des Bodens und Menge und Art der zu fixierenden Mikroorganismen. Sie sollte jedoch in einem Bereich von Trägermaterial : Boden zwischen $1 : 10^2$ bis $1 : 10^4$ (Volumen) liegen.

Eine besonders bevorzugte Ausführungsform besteht darin, die schadstoffspezifischen Mikroorganismenmono- und/oder -mischkulturen vor dem Einbringen in den Boden an einem Träger zu fixieren und den so erhaltenen Biokatalysator mit der Erde gleichmäßig zu vermischen und anschließend wie vorstehend beschrieben mit einer wäßrigen Minerallösung zu berieseln.

Das Einbringen von immobilisierten Mikroorganismen in den Boden ist besonders bevorzugt, weil damit zwei Wirkungen erzielt werden:

1. Besonders aktiv abbauende Stämme können für die betreffenden Materialien gerichtet eingesetzt werden. Dadurch können unterschiedliche Bodenverseuchungen gerichteter als bisher bekämpft werden.

2. Die Zelldichten in kontaminierten Erdmassen lassen sich noch weiter erhöhen, so daß die Effizienz des Sanierungsverfahrens weiter gesteigert wird.

3. Es wird mit Mikroorganismen gearbeitet, die speziell zum Abbau der bodenkontaminierenden Substanzen selektiert und gezüchtet worden sind und die durch die Immobilisierung im kontaminierten Bereich bleiben.

Zu den in beiden Ausführungsformen verwendbaren Trägermaterialien gehören Aktivkohle, Zeolith und Silicagel. Das Kriterium für das Trägermaterial ist, daß es porös ist, eine hohe innere Porenoberfläche besitzt, beispielsweise im Bereich von 100 bis 1500 m²/g, und gegenüber den Schadstoffen adsorptiv ist. Unter den genannten Trägermaterialien erwies sich Aktivkohle als besonders geeignet. Unter den verschiedenen Aktivkohlesorten erwiesen sich solche, die zusätzlich zur hohen inneren Oberfläche eine große Oberflächenadsorptionsfähigkeit aufweisen, als ganz besonders geeignet.

Zeolithe, auch als Alumosilikate bezeichnet, sind zusätzlich zur großen Oberfläche und zum hohen Adsorptionsvermögen kristallin, besitzen aufgrund ihrer bestimmten Kristallstruktur eine räumliche Anordnung gleichgebauter Adsorptions-Hohlräume, die über untereinander gleich große Porenöffnungen zugänglich sind und vermögen dadurch als Molekularsieb zu wirken. Aufgrund ihrer Molekularsiebwirkung sind sie selektiv gegenüber Schadstoffen, wodurch bei einsatzbedingter Auswahl der Zeolithe ihre Adsorptionsfähigkeit gegenüber dem zu entfernenden Schadstoff noch weitaus gesteigert werden kann.

Die Biokatalysatoren, bei denen die Mikroorganismen vor dem Einbringen in den Boden am Träger fixiert werden, werden dadurch hergestellt, daß man das Trägermaterial mit der für den abzubauenden Schadstoff geeigneten Mikroorganismensuspension in Kontakt bringt. Das Kontaktieren erfolgt durch ein sogenanntes Umströmen des Trägermaterials mit der Mikroorganismensuspension, d.h. einer Relativbewegung zwischen Solid-Korn und Fluidphase. Vorzugsweise geschieht dies durch Berieseln. Die Kontaktierung soll solange erfolgen, bis eine annähernde Zellsättigungsbeladung eingetreten ist. Dies kann zwischen 1 bis 5 Stunden dauern.

Die Verwendung einer Reihe von Biokatalysatoren bei der Abgasreinigung und ihre Herstellung sind aus der DE-OS-3 345 944 bekannt, jedoch war bei den völlig unterschiedlichen Gegebenheiten eines festen Bodens nicht vorauszusehen, dass in der Abgasreinigung eingesetzte Mikroorganismen auf einem Träger bei der Bodendekontaminierung mit so grossem Erfolg eingesetzt werden können.

Wenn unterschiedliche, sich in einer Erdschicht befindliche Bodenverseuchungen bekämpft werden sollen, können beispielsweise mehrere Biokatalysatoren, an die unterschiedliche Monokulturen fixiert sind, die den jeweiligen Schadstoff besonders aktiv abbauen, in den Boden eingebracht werden.

Das Einbringen der Trägermaterialien sowie der am Träger fixierten Mikroorganismen in den Boden kann durch übliche Bodenbearbeitungsgeräte erfolgen.

Je nachdem wie tief die Schadstoffe in das Erdreich eingedrungen sind und wie tief somit die Materialien in den Boden eingebracht werden müssen, kann das Einbringen z. B. durch Pflügen, Bodenmeliorationsgeräte wie Tiefenlockerungsgeräte oder Bagger erfolgen.

Je nach den gegebenen Umständen kann man die durch die Mikroorganismensuspension und/oder die wäßrige Minerallösung in den Boden gelangende Flüssigkeit im Boden versickern lassen oder aber man kann über in den Boden eingebrachte Dränagerohre die Flüssigkeit abpumpen.

Obgleich der mit der Berieselungslösung dem Boden zugeführte Sauerstoff im Prinzip für die Versorgung der Mikroorganismen ausreicht, kann es vorteilhaft sein, die abgepumpte Flüssigkeit mit Sauerstoff anzureichern und erneut zu versprühen.

Die Abpumpmethode bietet außerdem die Möglichkeit, Schadstoffe, die eventuell noch nicht biologisch abgebaut wurden und mit denen das Wasser beladen sein kann, außerhalb der Erdschicht biologisch zu reinigen.

Eine weitere Ausbildung des erfindungsgemäßen Verfahrens besteht darin, daß man zwischen kontaminiertem und nichtkontaminiertem Erdreich eine Trennschicht aus Biokatalysator einbringt. Dadurch wird das Abwandern von Schadstoffen in das nichtkontaminierte Erdreich verhindert. Diese Ausführungsform läßt sich in Verbindung mit allen anderen vorstehend beschriebenen Ausführungsformen anwenden. Als vorbeugende Maßnahme kann sie jedoch auch alleine angewandt werden. Dabei muß man jedoch Sorge dafür tragen, daß genügend Feuchtigkeit, Mineralstoffe und Sauerstoff zugeführt werden.

Nachstehende Figur und Beispiele dienen der weiteren Erläuterung der Erfindung.

Es zeigen:

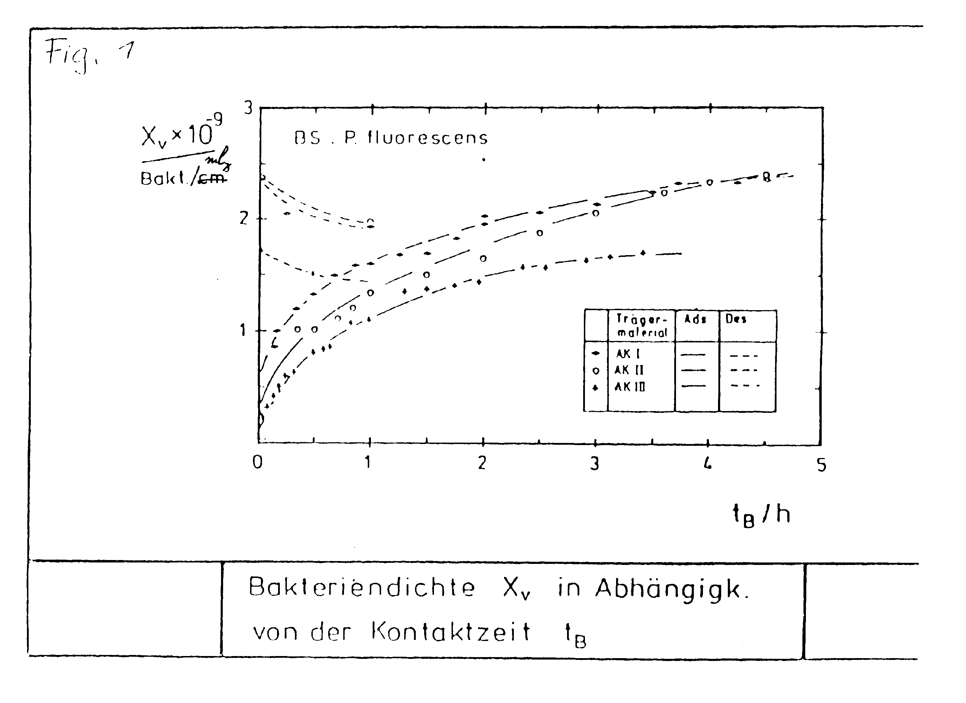

Fig. 1    eine graphische Darstellung der Zellbeladung verschiedener Trägermaterialien in Abhängigkeit von der Kontaktzeit.

Die in der Figur 1 und den Beispielen verwendeten Zeichen haben folgende Bedeutung:

A bzw. AK    = Aktivkohle
X    = Mikroorganismendichte/Volumen flüssige Phase
$X_v$    = Mikroorganismendichte/Volumen Festbettphase
$t_b$    = Kontaktzeit
TS    = Trockensubstrat
$V_1$    = Flüssigkeitsstrom
$X_m$    = Mikoorganismendichte/Kohlemasse

**Beispiel 1**

**Herstellung und Prüfung der erfindungsgemäß einsetzbaren Biokatalysatoren**

Es wurden mehrere erfindungsgemäß einsetzbare Biokatalysatoren dadurch hergestellt, daß man Schüttungen unterschiedlicher zellfreier, der in Tabelle 1 im einzelnen näher charakterisierten A-Kohle-Sorten mit einer Bakteriensuspension von Pseudomonas fluorescens (DSM 50090) (Zelldichte X = 0,725 g TS/l, $V_1$ = 8,8 l/h) im Rieselbettreaktor 3 bis 4 Stunden bei Raumtemperatur im Kreislaufsystem berieselte.

Die adsorbierte Zellmasse wurde indirekt durch die kontinuierliche Aufzeichnung der optischen Dichte der Bakteriensuspensionen in einem Sekundärkreislauf über ein zuvor aufgestelltes Kalibrierdiagramm ermittelt.

Die dabei erzielten Werte für die zeitliche Beladung $X_v$ (bezogen auf 1 ml Reaktorvolumen) sind aus Fig. 1 ersichtlich.

Man erkennt, daß die gebrochene A-Kohle (AK I) mit einer großen Oberflächenrauhigkeit (vergleichsweise zu AK II) und hoher innerer Porenoberfläche die günstigste Adsorbenscharakteristik aufweist. Neben der hohen Affinität der Mikroorganismen zum Trägermaterial ist also auch die äußere Oberflächenstruktur des Trägermaterials bedeutsam.

Man beschickte die A-Kohleschüttungen bei der jeweiligen Zelldichte $X_v$ mit einer (zellfreien) Mineralsalzlösung folgender Zusammensetzung: $K_2HPO_4$ 0,5 g, $MgSO_4 \cdot 7H_2O$ 0,2 g, $FeSO_4 \cdot 7H_2O$ 0,01 g, $CaCl_2$ 0,01 g, $NH_4NO_3$ 3,0 g, $(NH_4)_2SO_4$ 2,5 g, Spurenelementlösung 1 ml (Pfennig N, Lippert KG (1966), Arch. Mikrobiol. 55 : 245 : 256) auf 1000 ml vollentsalztes Wasser, und stellte dabei fest, daß - wie die gebrochenen Linien in Fig. 1 zeigen - keine signifikante Bakteriendesorption auftrat.

Es erfolgt somit eine weitgehend irreversible Adsorption. Die Werte für die maximal zu erzielende Zelldichte werden in Tabelle 2 wiedergegeben.

Vergleicht man die mit dem erfindungsgemäß einsetzbaren Trägermaterial erreichbaren Zelldichten mit denen von biologisch aktiven Erdmassen, so liegen diese um den Faktor $10^6$ höher. (Gemäß a.a.O. Battermann: 5000 aktive Bakterien in 1 g Erdmasse; erfindungsgemäß adsorbierte Zellen an 1 g A-Kohle: 9,0 $\cdot 10^9$).

**Beispiel 2**

Man verfuhr nach Beispiel 1, jedoch unter Verwendung von A-Kohle Typ AG 33/1-4 bzw. D 45/2 Kornkl.-Breite 1 - 4 mm der Bergbauforschung Essen und weiterer Mikroorganismenspecies. Die einzelnen verwendeten Mikroorganismen, die maximal zu erzielende Zelldichte und die damit abbaubaren Schadstoffe sind aus Tabelle 2 ersichtlich.

**Beispiel 3**

**Abbau von wasserlöslichen Schadstoffen durch Mikroorganismenbeschickung ohneTräger** (Vergleich)

Ein mit 200 g Sand (Erdschicht) einer Korngröße von 0,3 bis 1,2 mm gefüllter Rohrreaktor wurde mit einer Bakteriensuspension von Pseudomonas fluorescens (DSM 50090) einer optischen Dichte von $\sim$ 1, was einer Zellkonzentration von $\sim 10^9$ Bakt./ml entspricht, gleichmäßig besprüht. Die Bakterien befanden sich in der Wachstumsphase. Die optische Dichte der abfließenden Flüssigkeit wurde laufend gemessen. Die Flüssigkeit wurde mittels einer Schlauchpumpe im Kreislauf gefahren (4 l/h). Das Gesamtflüssigkeitsvolumen betrug 200 ml. Nach etwa 2 Stunden befanden sich etwa 60 % der Bakterien in der Sandschicht. Anschließend wurde die Bakteriensuspension durch eine bakterienfreie Minerallösung der in Beispiel 1 angegebenen Zusammensetzung ersetzt und wie beschrieben im Kreislauf gefahren.

Danach wurden dem Vorratsgefäß 5 ml einer Propionaldehydlösung (abzubauender Schadstoff) (1 ml Aldehyd/1000 ml $H_2O$) zugesetzt. Nach 40 min erfolgte die Probenahme am Boden der Sandschicht. Die Aldehydkonzentration war von ca. $4,8 \cdot 10^{-4}$ mol/l auf $0,24 \cdot 10^{-4}$ mol/l zurückgegangen, dies entspricht einer Abbaurate von $0,7 \cdot 10^{-6}$ mol/h in 1 ml Sand.

Ein Blindversuch ohne Bakterien ergab, daß der Aldehyd nicht meßbar an der Sandschicht adsorbiert wurde, womit der Nachweis erbracht ist, daß der Abbau mittels der Bakterien erfolgte.

**Beispiel 4**

**Abbau von wasserlöslichen Schadstoffen durch an einen Träger fixierte Mikroorganismen**

20 g eines gemäß Beispiel 1 hergestellten Biokatalysators unter Verwendung von AK I als Trägermaterial wurden mit 200 g Sand vermischt.

Die Abbaurate von Propionaldehyd in 1 ml Schüttungsvolumen lag bei einer Betriebsweise gemäß Beispiel 3 um $1,2 \cdot 10^{-6}$ mol/h. Dies ist etwa das 1,7-fache von Beispiel 3.

**Tabelle 1** Aktivkohlen

| A.-Kohle | Roh-mat. | Kornkl.-breite* | Form | BET-Oberfl. | Z'.korn-vol.*$c_H$ | Poren-feuchte*fp | stat. Feuchte*fs | Rüttel-dichte*fr |
|---|---|---|---|---|---|---|---|---|
| I Al-carbon (Lurgi) | Stein-kohle | 2 - 2,5 mm | Bruch-kohle | 1250 m²/g | 0,44 | 0,31 | 0,19 | 0,39 |
| II Hydraffin AS22 (Lurgi) | -"- | -"- | Form-kohle | 1400 m²/g | 0,49 | 0,20 | 0,20 | 0,38 |
| III Filtrilur VA (Lurgi) | -"- | -"- | Bruch-kohle | 100 m²/g | 0,42 | 0,17 | 0,18 | 0,58 |

* experimentell ermittelt

**Tabelle 2**

| A-Kohle | Mikroorganismen | $X^{max}_M$/Mikroorg. $g^{-1}$ | DSM Nr. | zuzuordnende Schadstoffe |
|---|---|---|---|---|
| I | P. fluorescens | $9,0 \cdot 10^9$ | 50090 | Propionaldehyd, Butanol, Äthylacetat, Methyläthylketon, Aceton |
| II | P. fluorescens | $9,2 \cdot 10^9$ | 50090 | Propionaldehyd |
| III | P. fluorescens | $4,0 \cdot 10^9$ | 50090 | Propionaldehyd |
| Typ AG 33/1-4 und D 45/2 | P. putida | $4 \cdot 10^9$ | 50198 | Phenole, Kresole, Aromaten, Alkane |
| Typ AG 33/1-4 und D 45/2 | Crytococcus elinovii | $3 \cdot 10^8$ | | Phenole, Kresole |
| D 45/2 | Candida parapsiloses | $4 \cdot 10^8$ | 70125 | Alkane, Phenole, Kresole |

## Patentansprüche

1. Verfahren zur Bodendekontaminierung mittels Mikroorganismen, bei dem man in die mit einem oder mehreren organischen Schadstoffen kontaminierten Erdschichten schadstoffspezifische Mikroorganismen in hoher Konzentration einbringt, dadurch gekennzeichnet, daß man die schadstoffspezifischen Mikroorganismen in an ein Trägermaterial fixierter Form in Gegenwart von Wasser, Sauerstoff und Mineralsalzen entweder dadurch dem Boden zuführt, daß man zunächst das Trägermaterial in den Boden einbringt und dann mit einer wäßrigen Suspension der schadstoffspezifischen Mikroorganismen berieselt oder dadurch, daß man das Trägermaterial vor dem Einbringen in den Boden mit einer wäßrigen Suspension der schadstoffspezifischen Mikroorganismen in Kontakt bringt und den mit den Mikroorganismen beladenen Träger bzw. Biokatalysator in den Boden einbringt.

2. Verfahren nach Anspruch 1, dadurch gekennzeichnet, daß man als schadstoffspezifische Mikroorganismen Monokulturen und/oder Mischkulturen und als Trägermaterial ein poröses, gegenüber dem Schadstoff adsorptives Trägermaterial mit hoher innerer Oberfläche verwendet, ausgewählt aus der Gruppe Aktivkohle, Zeolith und Silicagel.

3. Verfahren nach Anspruch 1 oder 2, dadurch gekennzeichnet, daß man zur Benetzung der an der Oberfläche des Trägers fixierten Mikroorganismen die Erdschicht mit einem wäßrigen Flüssigkeitsstrom berieselt.

4. Verfahren nach einem der Ansprüche 2 bis 3, dadurch gekennzeichnet, daß man als Biokatalysator mit einer schadstoffspezifischen Monokultur belegte Aktivkohle verwendet.

5. Verfahren nach einem der Ansprüche 2 bis 4, dadurch gekennzeichnet, daß man als Biokatalysator mit verschiedenen schadstoffspezifischen Monokulturen belegte Aktivkohle verwendet, die definiert für die Schadstoffzusammensetzung zusammengestellt sind.

6. Verfahren nach einem der Ansprüche 1 bis 5, dadurch gekennzeichnet, daß man die in den Boden eingebrachte Flüssigkeit über in den Boden eingebrachte Dränagerohre abpumpt, mit Sauerstoff anreichert und erneut versprüht.

7. Verfahren nach Anspruch 6, dadurch gekennzeichnet, daß man mit Restschadstoffen beladenes Wasser außerhalb der Erdschicht biologisch reinigt.

8. Verfahren nach einem der vorstehenden Ansprüche, dadurch gekennzeichnet, daß man den Biokatalysator als Trennschicht zwischen kontaminiertem Erdreich und nicht kontaminiertem Erdreich einbringt.

**Claims**

1. A process for the decontamination of soil using microorganisms, in which contaminant-specific microorganisms are introduced in high concentration into layers of earth contaminated with one or more organic contaminant, characterised in that contaminant-specific microorganisms are introduced to the soil in a form fixed to a carrier material, in the presence of water, oxygen and mineral salts, either by initially introducing the carrier material into the soil and then sprinkling with an aqueous suspension of the contaminant-specific microorganisms or by bringing the carrier material into contact with an aqueous suspension of the contaminant-specific microorganisms before introduction into the soil and introducing the carrier or biocatalyst loaded with microorganisms into the soil.

2. A process according to Claim 1, characterised in that monocultures and/or mixed cultures are used as contaminant-specific microorganisms and a porous carrier material with a high internal surface area, which is adsorptive towards the contaminant, is used as a carrier material, selected from the group active charcoal, zeolite and silica gel.

3. A process according to Claim 1 or 2, characterised in that the layer of earth is sprinkled with an aqueous stream of liquid to moisten the microorganisms fixed to the surface of the carrier.

4. A process according to one of Claims 2 to 3, characterised in that active charcoal coated with a contaminant-specific monoculture is used as a biocatalyst.

5. A process according to one of Claims 2 to 4, characterised in that active charcoal coated with various contaminant-specific monocultures which are assembled specifically for the contaminant composition is used as a biocatalyst.

6. A process according to one of Claims 1 to 5, characterised in that the liquid introduced to the soil is pumped away via drainage pipes placed in the soil, enriched with oxygen and resprayed.

7. A process according to Claim 6, characterised in that water contaminated with residual contaminants is biologically purified away from the layer of earth.

8. A process according to one of the previous Claims, characterised in that the biocatalyst is introduced as a separating layer between contaminated soil and non-contaminated soil.

**Revendications**

1. Procédé pour la décontamination du sol au moyen de microorganismes, suivant lequel on introduit à haute concentration, dans les couches de terre contaminées par une ou plusieurs matières organiques nocives, des microorganismes spécifiques desdites matières nocives, caractérisé en ce que l'on amène au sol les microorganismes spécifiques desdites matières nocives sous forme fixée sur un matériau support en présence d'eau, d'oxygène et de sels minéraux, soit en introduisant d'abord le matériau support dans le sol et ensuite en l'arrosant avec une suspension aqueuse des microorganismes spécifiques des matières nocives, soit en mettant le matériau support, avant son introduction dans le sol, en contact avec une suspension aqueuse des microorganismes spécifiques des matières nocives, et en introduisant dans le sol le support ou biocatalyseur chargé des microorganismes.

**2.** Procédé conforme à la revendication 1, caractérisé en ce qu'on utilise comme microorganismes spécifiques de la matière nocive des monocultures et/ou des mélanges de cultures, et comme matériau support un matériau support poreux, adsorbant vis-à-vis de la matière nocive et présentant une grande surface intérieure, choisi dans le groupe formé par charbon actif, zéolite et silicagel.

**3.** Procédé conforme à l'une des revendications 1 ou 2, caractérisé en ce que, pour mouiller les microorganismes fixés sur la surface du support, on arrose la couche de terre au moyen d'un flux liquide aqueux.

**4.** Procédé conforme à l'une des revendications 2 ou 3, caractérisé en ce que l'on utilise comme biocatalyseur du charbon actif chargé d'une monoculture spécifique de la matière nocive.

**5.** Procédé conforme à l'une des revendications 2 à 4, caractérisé en ce que l'on utilise comme biocatalyseur du charbon actif chargé de diverses monocultures spécifiques des matières nocives, ces monocultures étant assemblées d'une manière définie en fonction de la combinaison de matières nocives.

**6.** Procédé conforme à l'une des revendications 1 à 5, caractérisé en ce que l'on pompe, pour l'évacuer, dans des tubes de drainage introduits dans le sol, le liquide introduit dans le sol, on enrichit ce liquide en oxygène et on le répand de nouveau.

**7.** Procédé conforme à la revendication 6, caractérisé en ce que l'on nettoie biologiquement, à l'extérieur de la couche de terre, l'eau chargée de matières nocives résiduelles.

**8.** Procédé conforme à l'une des revendications précédentes, caractérisé en ce que l'on introduit le biocatalyseur comme couche de séparation entre terre contaminée et terre non contaminée.

Fig. 1

BS . P. fluorescens

$X_v \times 10^{-9}$
$\frac{mg}{Bakt./cm}$

| | Träger-material | Ads | Des |
|---|---|---|---|
| • | AK I | —— | --- |
| o | AK II | —— | --- |
| • | AK III | —— | --- |

$t_B / h$

Bakteriëndichte $X_v$ in Abhängigk. von der Kontaktzeit $t_B$